# EUROPEAN PATENT SPECIFICATION

(11) **EP 2 489 864 B1**
(45) Date of publication and mention of the grant of the patent: **14.07.2021**
(21) Application number: 11425036.8
(22) Date of filing: 18.02.2011
(51) Int. Cl.: F02D 41/06, F02D 41/24, B60H 1/00, F02M 31/125, F02M 37/22, F02M 37/30

(54) **DIESEL FUEL INJECTION SYSTEM IN A MOTOR VEHICLE PROVIDED WITH A DIESEL ENGINE**
DIESELKRAFTSTOFFEINSPRITZSYSTEM IN EINEM MIT DIESELMOTOR AUSGESTATTETEN KRAFTFAHRZEUG
SYSTÈME D'INJECTION DE CARBURANT DIESEL DANS UN VÉHICULE À MOTEUR FOURNI AVEC UN MOTEUR DIESEL

(43) Date of publication of application: 22.08.2012
(73) Proprietor: Fiat Group Automobiles S.p.A., 10135 Torino (TO) (IT)
(72) Inventor: Sergi, Marco, 10135 Torino (IT); Ciardulli, Martino, 10135 Torino (IT); Zenzon, Renato, 10135 Torino (IT); Zaccagni, Sergio, 10135 Torino (IT)
(74) Representative: Lovino, Paolo

(56) References cited:
- EP-A2- 1 505 292
- WO-A1-2011/003862
- DE-A1-102005 045 231
- GB-A- 2 466 275
- None

## Description

The present invention relates to a diesel fuel injection system in a motor vehicle provided with a diesel engine.

As is known, when a motor vehicle has been parked outdoors for a long time and exposed to low temperatures, the diesel engine may have trouble starting due to the formation of paraffin in the diesel fuel injection system. In particular, paraffin formation tends to occur in correspondence with the filter arranged upstream of the common rail of the fuel injection system. The amount of paraffin basically depends on the quality of the diesel fuel that is used and on the temperature reached by the fuel injection system while the vehicle is parked.

The presence of paraffin causes an undesirable loss of pressure in the part of the diesel fuel injection system straddling the filter. Prior art solutions envisage the use of filters provided with electric heaters to dissolve the paraffin. In such prior art solutions, the electric heater is electrically powered immediately after starting the engine. Reference is made e.g. to document EP1505292A2 or DE102005045231.

However, due to the presence of paraffin the difference in pressure before and after the filter can sometimes be high enough to prevent a minimum pressure from being reached in the common rail, making it extremely difficult to start the engine.

The need is therefore felt to improve the algorithms for activating and/or powering the electric heater, to dissolve the paraffin quickly and thus make engine start-up easier at low temperatures, without reducing the electric power supply to the other auxiliary components of the vehicle, especially the engine starting motor.

The purpose of the present invention is to provide a diesel fuel injection system in a motor vehicle provided with a diesel engine, which satisfies the need described above in a simple manner.

According to the present invention there is provided a diesel fuel injection system in a motor vehicle provided with a diesel engine, as claimed in claim 1.

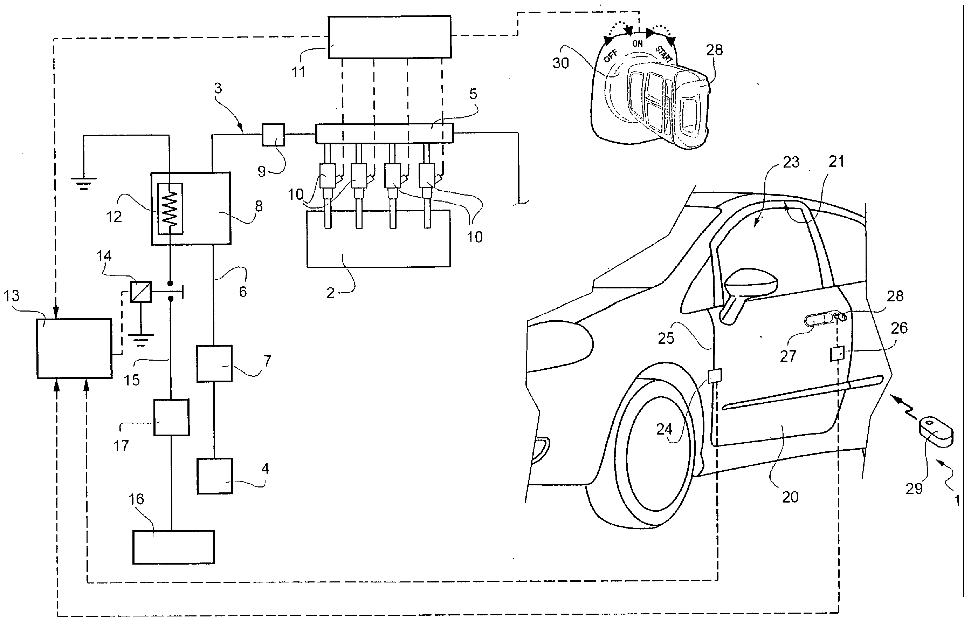

In order to better understand the present invention a non-limiting preferred embodiment thereof will now be described by way of example with reference to the accompanying figure, which is a schematic diagram of a preferred embodiment of the diesel fuel injection system in a motor vehicle provided with a diesel engine according to the present invention.

In the accompanying figure, designated as a whole by number 1 is a motor vehicle (partially illustrated) comprising a diesel engine 2 (schematically illustrated) and a system 3 (schematically illustrated) for delivering diesel fuel to a plurality of cylinders of the engine 2. The system 3 comprises a diesel fuel tank 4; a common manifold, or common rail 5; a duct 6 that connects an outlet of the tank 4 with an inlet of the common rail 5; a low-pressure pump 7 and a high-pressure pump 9, arranged along the duct 6; a filter 8 arranged along the duct 6, preferably between the pumps 7 and 9; and, for each cylinder, a relative injector 10 which is connected to the common rail 5 and injects the pressurized fuel into the cylinder in response to electric signals emitted by an electronic control unit 11 (normally referred to as an ECM - Engine Computer Module) which controls the operation of the engine 2.

The system 3 also comprises a heater 12, preferably an electric heater, housed in the filter 8; and an electronic control unit 13 (provided in what is known as the BCM, i.e. Body Computer Module), which activates/deactivates a device 14 that powers the heater 12 to heat the filter 8 and, thus, the diesel contained in said filter 8, in response to operating signals of the motor vehicle 1 and/or on the basis of algorithms implemented in the units 13 and 11. In particular, since the heater 12 is an electric heater, the device 14 is defined by a relay arranged along an electric power supply line 15 that connects the heater 12 to a battery 16 and is provided with a fuse 17, arranged between the battery 16 and said relay.

During the normal operation of the engine 2, the unit 13 switches the heater 12 on/off in response to any requests sent by the unit 11. Said requests are sent on the basis of algorithms, which are not described in detail here, implemented in the unit 11 and based on the temperature of the diesel fuel, measured in the system 3 by means of appropriate sensors which are not illustrated. In particular, a request to activate the heater 12 is sent when the temperature of the diesel fuel falls below a given threshold. Moreover, in the event of an accident, when the normal fuel cut-off system (not illustrated) in the system 3 is activated, activation of the heater 12 is also prevented.

According to the algorithm implemented in the unit 13, the unit 13 activates the power supply to the heater 12 before the engine 2 is started in response to a activation signal received by the unit 13. According to the invention, this activation signal indicates a manual action or a controlled action, which will lead to the opening of a door 20 on the driver's side of the motor vehicle 1 and is, preferably, sent to the unit 13 via the CAN (Controller Area Network) line of the motor vehicle 1.

The door 20 is movable between an open position and a closed position, to open/close a door opening 21 arranged at the side of a driving position in the passenger compartment 23 of the motor vehicle 1. The motor vehicle 1 comprises a switch 24 (schematically illustrated), which is generally arranged on an upright 25 to which the door 20 is hinged, and which switches when the door 20 is moved from the closed position to the open position. Moreover, a lock 26 (schematically illustrated) is provided to block the door 20 in the closed position. The blocking action exerted by the lock 26 can be released by manually operating a handle 27; and/or by manually operating a key 28; and/or by manually operating a remote control 29; and/or automatically at the approach of an electronic badge or by a similar remote recognition system (not illustrated) held by the driver or by another user.

Therefore, the electric signal that enables the activation of the power supply to the heater 12 can be defined by a variety of alternatives, respectively associated with different possible events that will lead to the opening of the door 20. For example, the activation signal can derive from:
- the switching of the switch 24 when the door 20 moves away from the closed position;
- the electric opening of the lock 26, i.e. when blocking action on the door 20 is released;
- the switching of a switch (not illustrated) associated with the opening movement of the handle 27;
- a remote opening signal sent by the remote control 29.

According to the algorithms implemented in the unit 13, the unit 13 interrupts the power supply to the heater 12 to prevent excessive current absorption, which could undermine the functioning of other electrically-powered devices of the motor vehicle, in particular the operation of the electric starting motor 2:
- when the outside temperature is above a given threshold, and preferably
- after a given maximum period of time (for instance 15 seconds) from the moment of activation, according to a count performed by a timer of the unit 13 and/or
- after a given maximum period of time from the moment in which the key 28 is turned in a lock cylinder 30 of the motor vehicle 1 from an "OFF" position to an "ON" position, for example to switch on the dash panel of the motor vehicle 1 (not illustrated); and/or
- when the key 28 is turned in the lock cylinder 30 from the "ON" position back to the "OFF" position, without having turned the key 28 to the start position; and/or
- when the key 28 is turned to a "START" position in the lock cylinder 30, i.e. during the start-up or cranking of the engine 2.

From the above description it is apparent that the algorithm implemented in the unit 13 of the system 3 enables the filter 8 to be heated before the engine 2 is started and for long enough to ensure that any paraffin in the filter 8 dissolves. The moment at which the heater 12 is activated and thus the moment at which heating starts is unequivocally established, on the basis of a activation signal which indicates a high likelihood of the driver starting the engine 2 within a short time. Moreover, the activation signal used to activate the power supply to the heater 12 is normally already available in the motor vehicle 1, or can be emitted by devices already provided in the motor vehicle 1, without the need for any additional components.

Moreover, the algorithms implemented in the unit 13 on the one hand enable the amount of current absorbed by the battery 16 to be reduced as much as possible and, on the other, permit undesirable activations to be avoided.

Lastly, with the engine 2 running under normal operating conditions, the heater 12 is only activated if necessary, at the request of the unit 11.

Lastly, from the above description, it is clear that modifications and variations may be made to the system 3 described herein without departing from the scope of the present invention as set forth in the appended claims.

In particular, the filter 8 could be arranged in a position other than that illustrated in the accompanying schematic diagram, for example it could be integrated into the pump 9; and/or additional heaters could be provided along the duct 6.

Moreover, the heater 12 could be of a type other than an electric heater, for example it could be part of a hydraulic heating system, with a boiler or thermal energy storage system.

## Claims

1. A diesel fuel injection system (3) in a motor vehicle (1) provided with a diesel engine (2); the system comprising:
- a common rail (5);
- a filter (8) arranged along a duct (6) which delivers diesel fuel to said common rail (5);
- a heater (12);
- control means (11, 13) configured so as to activate/deactivate said heater (12) in response to signals that are received and on the basis of algorithms implemented in said control means (11, 13);
said control means (13) being configured so as to activate said heater (12) in response to an activation signal indicating an event leading to the opening of a driver side door (20) of said vehicle (1); **characterised in that** said heater is housed in said filter (8), and said control means (13) is configured so as to deactivate said heater when the outside temperature is above a given threshold.

2. The system according to Claim 1, **characterised in that** said control means (13) are configured so as to deactivate said heater (12) after a given maximum period of time.

3. The system according to any one of the preceding Claims, **characterised in that** said control means (13) are configured so as to deactivate said heater (13) during the cranking of said engine (2).

4. The diesel fuel injection system according to any one of the preceding Claims, **characterised in that** said control means (13) are configured so as to deactivate said heater (12) when a key (24) is turned in a lock cylinder (39) to switch on and then switch off a dash panel of said motor vehicle (1).

5. A motor vehicle comprising:
- a passenger compartment (23) having a driver's seat;
- a driver side door (20), which is movable between an open position and a closed position to open/close a door opening (21), at the side of said driver's seat;
- a lock (26) to block said driver side door (20) in the closed position;
- a control device (27,28,29) that can be manually operated to release the blocking action exerted by said lock (26);
- a switch (24) that switches when said driver side door (20) is moved from the closed position;
- a diesel engine (2);
- a diesel fuel injection system (3) made according to any one of the preceding Claims.

6. A motor vehicle according to Claim 5, **characterised in that** said activation signal is emitted in response to the switching of said switch (24).

7. A motor vehicle according to Claim 5, **characterised in that** said activation signal is emitted by said lock (26).

8. A motor vehicle according to Claim 5, **characterised in that** said activation signal is emitted in response to the manual operation of said control device (27,28,29).

## Patentansprüche

1. Dieselkraftstoff-Einspritzanlage (3) in einem Kraftfahrzeug (1), das mit einem Dieselmotor (2) versehen ist, wobei die Anlage Folgendes umfasst:
- ein gemeinsames Verteilerrohr (5),
- einen Filter (8), der entlang einer Leitung (6) angeordnet ist, die dem gemeinsamen Verteilerrohr (5) Dieselkraftstoff zuführt,
- eine Heizeinrichtung (12),
- Steuerungsmittel (11, 13), die so konfiguriert sind, dass sie die Heizeinrichtung (12) als Reaktion auf Signale, die empfangen werden, und auf Grundlage von Algorithmen, die in den Steuerungsmittel (11, 13) umgesetzt werden, aktivieren/deaktivieren,
wobei die Steuerungsmittel (13) so konfiguriert sind, dass sie die Heizeinrichtung (12) als Reaktion auf ein Aktivierungssignal aktivieren, das ein Ereignis anzeigt, das zum Öffnen einer Fahrerseitentür (20) des Kraftfahrzeugs (1) führt, **dadurch gekennzeichnet, dass** die Heizeinrichtung in dem Filter (8) untergebracht ist und die Steuerungsmittel (13) so konfiguriert sind, dass sie die Heizeinrichtung deaktivieren, wenn die Außentemperatur oberhalb eines gegebenen Schwellwertes liegt.

2. Anlage nach Anspruch 1, **dadurch gekennzeichnet, dass** die Steuerungsmittel (13) so konfiguriert sind, dass sie die Heizeinrichtung (12) nach einem gegebenen maximalen Zeitraum deaktivieren.

3. Anlage nach einem der vorhergehenden Ansprüche, **dadurch gekennzeichnet, dass** die Steuerungsmittel (13) so konfiguriert sind, dass sie die Heizeinrichtung (12) während des Anlassens des Motors (2) deaktivieren.

4. Dieselkraftstoff-Einspritzanlage nach einem der vorhergehenden Ansprüche, **dadurch gekennzeichnet, dass** die Steuerungsmittel (13) so konfiguriert sind, dass sie die Heizeinrichtung (12) deaktivieren, wenn ein Schlüssel (24) in einem Schlosszylinder (39) gedreht wird, um ein Armaturenbrett des Kraftfahrzeugs (1) einzuschalten und danach auszuschalten.

5. Kraftfahrzeug, das Folgendes umfasst:
- eine Fahrgastkabine (23), die einen Fahrersitz aufweist,
- eine Fahrerseitentür (20), die zwischen einer offenen Stellung und einer geschlossenen Stellung beweglich ist, um eine Türöffnung (21) zu öffnen/zu schließen, an der Seite des Fahrersitzes,
- ein Schloss (26), um die Fahrerseitentür (20) in der geschlossenen Stellung abzusperren,
- eine Steuerungsvorrichtung (27, 28, 29), die manuell betätigt werden kann, um die Absperrwirkung, die durch das Schloss (26) ausgeübt wird, zu lösen,
- einen Schalter (24), der schaltet, wenn die Fahrerseitentür (20) aus der geschlossenen Stellung bewegt wird,
- einen Dieselmotor (2),
- eine Dieselkraftstoff-Einspritzanlage (3), die nach einem der vorhergehenden Ansprüche hergestellt ist.

6. Kraftfahrzeug nach Anspruch 5, **dadurch gekennzeichnet, dass** das Aktivierungssignal als Reaktion auf das Schalten des Schalters (24) ausgestrahlt wird.

7. Kraftfahrzeug nach Anspruch 5, **dadurch gekennzeichnet, dass** das Aktivierungssignal durch das Schloss (26) ausgestrahlt wird.

8. Kraftfahrzeug nach Anspruch 5, **dadurch gekennzeichnet, dass** das Aktivierungssignal als Reaktion auf die manuelle Betätigung der Steuerungsvorrichtung (27, 28, 29) ausgestrahlt wird.

## Revendications

1. Système d'injection de carburant diesel (3) dans un véhicule motorisé (1) pourvu d'un moteur diesel (2) ; le système comprenant :
- une rampe commune (5) ;
- un filtre (8) agencé le long d'un conduit (6) qui distribue du carburant diesel à ladite rampe commune (5) ;
- un élément chauffant (12) ;
- des moyens de commande (11, 13) configurés de manière à activer/désactiver ledit élément chauffant (12) en réponse à des signaux qui sont reçus et sur la base d'algorithmes mis en œuvre dans lesdits moyens de commande (11, 13) ;
ledit moyen de commande (13) étant configuré de manière à activer ledit élément chauffant (12) en réponse à un signal d'activation indiquant un événement menant à l'ouverture d'une portière côté conducteur (20) dudit véhicule (1) ; **caractérisé en ce que** ledit élément chauffant est logé dans ledit filtre (8), et ledit moyen de commande (13) est configuré de manière à désactiver ledit élément chauffant lorsque la température extérieure est au-dessus d'un seuil donné.

2. Système selon la revendication 1, **caractérisé en ce que** ledit moyen de commande (13) est configuré de manière à désactiver ledit élément chauffant (12) après une période de temps maximale donnée.

3. Système selon l'une quelconque des revendications précédentes, **caractérisé en ce que** ledit moyen de commande (13) est configuré de manière à désactiver ledit élément chauffant (13) pendant le démarrage dudit moteur (2).

4. Système d'injection de carburant diesel selon l'une quelconque des revendications précédentes, **caractérisé en ce que** ledit moyen de commande (13) est configuré de manière à désactiver ledit élément chauffant (12) lorsqu'une clé (24) est tournée dans un barillet de serrure (39) pour allumer puis éteindre le tableau de bord dudit véhicule motorisé (1).

5. Véhicule motorisé comprenant :
- un habitacle (23) comportant un siège du conducteur ;
- une portière côté conducteur (20), qui est mobile entre une position ouverte et une position fermée pour ouvrir/fermer une ouverture de portière (21), au niveau du côté dudit siège du conducteur ;
- un verrou (26) pour bloquer ladite portière côté conducteur (20) dans la position ouverte ;
- un dispositif de commande (27, 28, 29) qui peut être manuellement actionné pour libérer l'action de blocage exercée par ledit verrou (26) ;
- un commutateur (24) qui commute lorsque ladite portière côté conducteur (20) est déplacée depuis la position fermée ;
- un moteur diesel (2) ;
- un système d'injection de carburant diesel (3) fabriqué selon l'une quelconque des revendications précédentes.

6. Véhicule motorisé selon la revendication 5, **caractérisé en ce que** ledit signal d'activation est émis en réponse à la commutation dudit commutateur (24).

7. Véhicule motorisé selon la revendication 5, **caractérisé en ce que** ledit signal d'activation est émis par ledit verrou (26).

8. Véhicule motorisé selon la revendication 5, **caractérisé en ce que** ledit signal d'activation est émis en réponse à l'actionnement manuel dudit dispositif de commande (27, 28, 29).
